# EUROPÄISCHE PATENTANMELDUNG

(11) **EP 3 611 787 A2**
(43) Veröffentlichungstag der Anmeldung: **19.02.2020**
(21) Anmeldenummer: 19183532.1
(22) Anmeldetag: 01.07.2019
(51) Int. Cl.: H01M 8/04746

(54) **BRENNSTOFFZELLENSYSTEM FÜR EIN LUFTFAHRZEUG**

(30) Priorität: 14.08.2018 DE 102018119758
(71) Anmelder: Airbus Operations GmbH, 21129 Hamburg (DE)
(72) Erfinder: Hoffjann, Claus, 21129 Hamburg (DE); Wolff, Christian, 21129 Hamburg (DE)
(74) Vertreter: LKGLOBAL Lorenz & Kopf PartG mbB Patentanwälte

(57) **Zusammenfassung**

Ein für einen druckunabhängigen Betrieb vorgesehenes Brennstoffzellensystem (2), in dem mindestens eine Brennstoffzelle mit einer offenen Kathode vorgesehen ist, schließt sich eine erste Fluidkammer (18) an einen Einströmquerschnitt an und eine zweite Fluidkammer (32) an einen Ausströmquerschnitt (14) an. In den Fluidkammern (18, 32) kann ein Überdruck eingestellt werden, der an den Betrieb der mindestens einen Brennstoffzelle angepasst ist.

## Beschreibung

### TECHNISCHES GEBIET

Die Erfindung betrifft ein Brennstoffzellensystem für ein Luftfahrzeug sowie ein Luftfahrzeug, das mit einem derartigen Brennstoffzellensystem ausgestattet ist.

### HINTERGRUND DER ERFINDUNG

Die Verwendung von Brennstoffzellen in Luftfahrzeugen ist bekannt. Es existieren verschiedene Konzepte, Brennstoffzellen in Luftfahrzeuge zu integrieren. An die Verwendung von PEM-Brennstoffzellen sind besondere Bedingungen geknüpft, die sich insbesondere auf die Einhaltung von bestimmten Randbedingungen beziehen. Zugeführte Edukte sollten etwa eine Temperatur von ca. 40 bis 50 °C möglichst nicht überschreiten. Eine Aufrechterhaltung einer Feuchte der Membran sollte ebenfalls ermöglicht werden.

Die Verwendung von Brennstoffzellenstapeln mit luftgekühlten, sog. offenen Kathoden ist überdies sehr vorteilhaft. Allerdings wird durch die Bauart ein Betrieb auf Höhen beschränkt, die unterhalb von ca. 4.000 m liegen. Soll eine solche Brennstoffzelle in einem Luftfahrzeug eingesetzt werden und befindet sich diese in einem nicht druckbeaufschlagten Bereich des Rumpfs, ist ein Betrieb nur in bodennahen Höhen möglich.

DE 10 2005 010 399 A1 zeigt ein Brennstoffzellensystem zur Energieversorgung eines Luftfahrzeugs, das eine Brennstoffzelle, einen Wasserstofftank und einen Sauerstofftank aufweist, wobei der Wasserstofftank und der Sauerstofftank zur Versorgung der Brennstoffzelle an die Brennstoffzelle angeschlossen sind. Das Brennstoffzellensystem ist insbesondere zur Anordnung in einem druckbelüfteten und klimatisierten Bereich des Luftfahrzeugs angeordnet.

### ZUSAMMENFASSUNG DER ERFINDUNG

Es ist eine Aufgabe der Erfindung, ein Brennstoffzellensystem vorzuschlagen, bei dem die Vorteile einer offenen Kathode genutzt werden können, dennoch eine Integration in einem nicht druckbeaufschlagten Bereich ermöglicht wird und ein Betrieb bei sämtlichen Flughöhen möglich ist.

Diese Aufgabe wird gelöst durch ein Brennstoffzellensystem mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Brennstoffzellensystem für ein Luftfahrzeug vorgeschlagen, aufweisend eine Brennstoffzelleneinheit mit einem Anodeneinlass und einer offenen Kathode, die einen Einströmquerschnitt und einen Ausströmquerschnitt aufweist, eine erste Fluidkammer mit einem ersten Hohlraum, einer ersten Verbindungsöffnung und mindestens einem ersten Fluidanschluss, eine zweite Fluidkammer mit einem zweiten Hohlraum, einer zweiten Verbindungsöffnung und mindestens einem zweiten Fluidanschluss, eine mit dem ersten Fluidanschluss gekoppelte Einrichtung zum Bereitstellen druckbeaufschlagter Luft, einen mit dem zweiten Fluidanschluss gekoppelten Luftauslass, und eine erste Druckregeleinrichtung, wobei die erste Verbindungsöffnung mit dem Einströmquerschnitt verbunden ist, so dass der Einströmquerschnitt ausschließlich mit dem ersten Hohlraum direkt in Verbindung steht, wobei die zweite Verbindungsöffnung mit dem Ausströmquerschnitt verbunden ist, so dass der Ausströmquerschnitt ausschließlich mit dem zweiten Hohlraum in direkter Verbindung steht, und wobei die erste Druckregeleinrichtung dazu ausgebildet ist, durch Beeinflussen des Abflusses von Luft aus der zweiten Fluidkammer einen Überdruck in dem zweiten Hohlraum zu regeln, so dass ein vorbestimmter, für den Betrieb der Brennstoffzelleneinheit erforderlicher Luftfluss von der ersten Fluidkammer durch die offene Kathode der Brennstoffzelleneinheit zu der zweiten Fluidkammer fließt.

Die Brennstoffzelleneinheit ist eine bevorzugt in sich geschlossene Baugruppe, die eine oder mehrere Brennstoffzellen beinhalten kann. Eine Brennstoffzelleneinheit könnte etwa in Form eines Brennstoffzellenstapels ausgeführt sein, in der mehrere Brennstoffzellen angeordnet und gemeinsam mit Edukten versorgt werden. Die Brennstoffzelleneinheit besitzt etwa den Anodeneinlass, durch den Brennstoff, bevorzugt Wasserstoff, der Brennstoffzelleneinheit von einer externen Quelle zuführbar ist. Es wäre ferner möglich, auch mehrere Brennstoffzellenstapel einzusetzen.

Erfindungsgemäß weist die Brennstoffzelleneinheit eine offene Kathode auf, welche einen Einströmquerschnitt und einen Ausströmquerschnitt besitzt. Dadurch kann Luft durch einfache Mittel an die Kathode geleitet werden. Die Luft strömt durch den Einströmquerschnitt in die offene Kathode hinein, durch die offene Kathode in Richtung des Ausströmquerschnitts und dort wieder heraus. Dadurch wird zum einen der Sauerstoff, der sich in der Luft befindet, als Oxidant der Kathode zugeführt. Zum anderen wird in der Kathode vorliegende Wärme von dem Luftstrom aufgenommen und zumindest teilweise von der Kathode weggeführt. Die offene Kathode erleichtert folglich die Sauerstoffzufuhr und die Kühlung. Zusätzlich kann durch den kontinuierlichen Luftstrom angefallenes Wasser aus der Kathode herausgetragen werden.

Eine Besonderheit des erfindungsgemäßen Brennstoffzellensystems liegt in der ersten Fluidkammer, die einen ersten Hohlraum, eine erste Verbindungsöffnung und mindestens einen ersten Fluidanschluss aufweist. Die erste Fluidkammer ist als eine Art Behälter zu verstehen, dessen Volumen durch den ersten Hohlraum definiert wird. Der Hohlraum ist durch die erste Verbindungsöffnung nach außen hin geöffnet. Die erste Verbindungsöffnung kann sich über einen wesentlichen Flächenbereich einer Begrenzungsfläche der ersten Fluidkammer erstrecken. Dies kann auch durch das grundsätzliche Fehlen der betreffenden Begrenzungsfläche erreicht werden. Die erste Verbindungsöffnung ist an den Einströmquerschnitt der Brennstoffzelleneinheit anzupassen, so dass die erste Verbindungsöffnung bündig mit dem Einströmquerschnitt der Brennstoffzelleneinheit in Verbindung gebracht werden kann.

Bevorzugt ist die erste Fluidkammer so ausgeführt, dass sie bündig an die Brennstoffzelleneinheit anbringbar ist, so dass der Einströmquerschnitt und die erste Verbindungsöffnung fluiddicht miteinander verbunden werden können. Durch diese Verbindung kann aus der ersten Verbindungsöffnung austretende Luft ausschließlich in den Einströmquerschnitt geraten. Ein Übergang zwischen der ersten Fluidkammer und der Brennstoffzelleneinheit wird bevorzugt abgedichtet, um ein Entweichen von Luft aus der Verbindungsstelle zu verhindern.

Mithilfe des ersten Fluidanschlusses kann eine Fluidverbindung zwischen der ersten Fluidkammer und der Einrichtung zum Bereitstellen druckbeaufschlagter Luft durchgeführt werden. In dem ersten Hohlraum der ersten Fluidkammer kann dadurch ein Überdruck generiert werden, der zum Einströmen von Luft in den Einströmquerschnitt, durch die offene Kathode und zu der zweiten Fluidkammer führt.

Die zweite Fluidkammer ist analog dazu ausgestaltet und weist folglich einen zweiten Hohlraum, eine zweite Verbindungsöffnung und mindestens einen zweiten Fluidanschluss auf. Die zweite Verbindungsöffnung ist dazu angepasst, mit dem Ausströmquerschnitt verbunden zu werden, so dass die offene Kathode an ihrem Ausströmende ausschließlich mit dem zweiten Hohlraum in Fluidverbindung steht. Ein Übergang zwischen dem Ausströmquerschnitt und der zweiten Fluidkammer kann bevorzugt abgedichtet werden, so dass auch dort das Entweichen von Luft verhindert werden kann.

Die erste Fluidkammer und die zweite Fluidkammer könnten jeweils als ein separates Gehäuse ausgeführt sein. Allerdings ist auch möglich, ein einzelnes Gehäuse zu verwenden, in dem beide Fluidkammern voneinander separiert sind. Dieses Gehäuse kann auch die Brennstoffzelleneinheit umschließen. Es ist bei jeder Ausführung besonders darauf zu achten, dass die Fluidkammern gegenüber der jeweils anderen Fluidkammer sowie gegenüber der Brennstoffzelleneinheit abgedichtet ist und ausschließlich der weiter vorangehend genannte Luftstrom erfolgt.

Luft, die von der ersten Fluidkammer in die zweite Fluidkammer strömt, verlässt die zweite Fluidkammer teilweise über einen zweiten Fluidanschluss. Diese Luft ist in ihrem Sauerstoffgehalt etwas reduziert und durch den Strömungsweg durch die offene Kathode leicht erwärmt.

Durch die erste Druckregeleinrichtung wird der Abfluss von Luft aus der zweiten Fluidkammer beeinflusst. Durch das kontinuierliche Einleiten druckbeaufschlagter Luft in den ersten Hohlraum der ersten Fluidkammer kann folglich der Überdruck sowohl in der zweiten Fluidkammer und in der ersten Fluidkammer direkt durch den Abfluss der Luft geregelt werden. Das hierdurch resultierende Druckniveau, in dem sich die Brennstoffzelleneinheit befindet, kann folglich zum Gewährleisten eines optimalen Betriebs der Brennstoffzelleneinheit angepasst werden. Dadurch wird die Brennstoffzelleneinheit von ihrer direkten Umgebung unabhängig und könnte insbesondere derart betrieben werden, dass sie im Wesentlichen ein Druckniveau erfährt, wie bei einem Bodenbetrieb.

Zusammengefasst ergibt sich durch den vorangehend dargestellten Aufbau ein Brennstoffzellensystem, welches unabhängig von sich ändernden Umgebungsbedingungen in einem Luftfahrzeug betreibbar ist. Dies erlaubt sowohl die Anordnung in einem nicht druckbeaufschlagten Bereich des Luftfahrzeugs als auch die Verwendung von Brennstoffzellen mit einer offenen Kathode. Dadurch können der Aufbau der Brennstoffzellen und ihr Betrieb deutlich vereinfacht werden und das resultierende Gewicht des Brennstoffzellensystems ist gering.

Bevorzugt ist die erste Druckregeleinrichtung dazu eingerichtet, den Überdruck in dem zweiten Hohlraum in Abhängigkeit von einem Umgebungsdruck des Brennstoffzellensystems zu ändern. Der Überdruck kann dort etwa auf ein vorbestimmtes Niveau geregelt werden, das den ordnungsgemäßen Betrieb der Brennstoffzelleneinheit ermöglicht, jedoch nicht unbedingt einem Druck am Boden entspricht. Mit sinkendem Umgebungsdruck könnte der Druck in der zweiten Fluidkammer beispielsweise bis zu einem Mindestwert gesenkt werden, so dass die mechanische Belastung für das Brennstoffzellensystem aufgrund eines Überdrucks möglichst gering ist. Es ist vorstellbar, einen absoluten Druck von mindestens 600 mbar in der zweiten Fluidkammer einzustellen. Es ist weiterhin vorstellbar, einen Druck von mindestens 100 mbar über dem Umgebungsdruck vorzusehen.

Bevorzugt weist das Brennstoffzellensystem ferner eine zweite Druckregeleinrichtung auf, wobei der Anodeneinlass mit einer Einrichtung zum Bereitstellen von Wasserstoff gekoppelt ist, wobei die zweite Druckregeleinrichtung in Wirkverbindung mit dem Anodeneinlass und der Einrichtung zum Bereitstellen von Wasserstoff steht und wobei die zweite Druckregeleinrichtung dazu eingerichtet ist, einen Brennstoffdruck an dem Anodeneinlass abhängig von einem Druck in der ersten Fluidkammer zu beeinflussen. Der Druck in der ersten Fluidkammer steigt, wenn der Abfluss aus der zweiten Fluidkammer zum Erhöhen des dortigen Drucks beeinflusst und insbesondere gedrosselt wird. Um einen ordnungsgemäßen Betrieb des Brennstoffzellensystems zu fördern, sollte an der Anode ein geeigneter Brennstoffdruck vorhanden sein. Dieser sollte, wenn möglich, ungefähr dem Druck in der ersten Fluidkammer entsprechen. Folglich kann die zweite Druckregeleinrichtung dazu eingesetzt werden, diesen Brennstoffdruck zu erreichen. Durch die genannte Wirkverbindung könnte etwa ein Druckregelventil, eine Drossel oder ein Element zum Erhöhen eines Drucks direkt beeinflusst werden. Insbesondere kann die Wirkverbindung durch ein Ventil realisiert werden, welches über den Druck in der ersten Fluidkammer angesteuert wird. Eine übermäßige Druckdifferenz über die Brennstoffzelleneinheit, d.h. zwischen einer Anodenseite und einer Kathodenseite wird vermieden, so dass insbesondere eine Membran der Brennstoffzellen nicht zu stark belastet wird bzw. die Membranen nicht zu stark belastet werden. Es könnte bevorzugt sein, eine Druckdifferenz möglichst auf 350-400 mbar oder weniger zu begrenzen. Dies ist von der Bauart der mindestens einen Brennstoffzelle abhängig.

Die Einrichtung zum Bereitstellen druckbeaufschlagter Luft kann insbesondere einen Verdichter aufweisen, der mit dem ersten Fluideinlass gekoppelt ist. Der Verdichter wird bevorzugt von einer mechanisch unabhängigen Einrichtung betrieben. Dies könnte etwa ein Elektromotor sein, der mit einer Spannung versorgt wird, die einem Bordnetz des Luftfahrzeugs entnommen wird oder der Brennstoffzelleneinheit selbst. In letzterem Fall kann insbesondere ein Pufferspeicher vorgesehen sein, der bei Inbetriebnahme der Brennstoffzelleneinheit das Versorgen des Elektromotors mit einer Spannung sicherstellt, bevor die Brennstoffzelleneinheit ausreichend Spannung liefert. Der durch den Verdichter bereitstellbare (absolute) Druck kann etwa in einem Bereich von 0,7 bar bis 1,5 bar liegen. Es könnten weiterhin auch mehrere Verdichter parallel oder in Reihe geschaltet sein. Bei der Verwendung mehrerer Brennstoffzellenstapel in der Brennstoffzelleneinheit könnte auch jeweils mindestens ein Verdichter für jeden Brennstoffzellenstapel eingesetzt werden.

Um ein Überschreiten einer tolerierbaren Temperatur von Zuluft zu verhindern, kann das Brennstoffzellensystem ferner einen Vorkühler zum Kühlen druckbeaufschlagter Luft aufweisen, der zwischen der Einrichtung zum Bereitstellen druckbeaufschlagter Luft und dem ersten Fluideinlass angeordnet ist. Der Vorkühler kann einen Wärmetauscher aufweisen, der beispielhaft eine Rippen- oder Gitterstruktur besitzt. Der Wärmetauscher wird von der verdichteten Luft durchströmt und kann dabei Wärme abgeben, sofern der Wärmetauscher eine niedrigere Temperatur aufweist. Durch eine thermisch mit dem Wärmetauscher verbundene Wärmeabgabeeinrichtung kann Wärme an die Umgebung oder eine andere Komponente abgegeben werden. Es ist vorstellbar, dass Hohlräume des Wärmetauschers von einer Kühlflüssigkeit durchströmt werden, die zu einem Kühlkreislauf gehören. Dieser könnte mit einer Wärmeabgabeeinrichtung in Form eines weiteren Wärmetauschers ausgestattet sein, etwa einem Hautfeldwärmetauscher zur Integration in eine Außenhaut des Luftfahrzeugs oder einem von Außenluft durchströmten Wärmetauscher. Die maximal tolerierbare Temperatur könnte etwa bei 40-45 °C liegen.

Der Vorkühler könnte in besonderen Bedingungen auch zur Vorwärmung von verdichteter Luft genutzt werden. Damit kann eine Mindesttemperatur von etwas über 0 °C sichergestellt werden.

In einer vorteilhaften Ausführungsform weist die erste Fluidkammer einen ersten Rezirkulationsanschluss auf und die zweite Fluidkammer weist einen zweiten Rezirkulationsanschluss auf, wobei der erste und der zweite Rezirkulationsanschluss über ein Gebläse miteinander gekoppelt sind, das Luft aus der zweiten Fluidkammer in die erste Fluidkammer fördert. Hierdurch kann zum einen ein gewisser Druckausgleich zwischen der zweiten Fluidkammer und der ersten Fluidkammer erfolgen. Zum anderen kann der notwendige externe Luftstrom zum Durchströmen der offenen Kathode reduziert werden. Weiterhin könnte hierdurch auch der Feuchtigkeitshaushalt optimiert werden, da feuchte Abluft wieder in die Zuluft gemischt wird.

Zwischen dem Gebläse und dem ersten Rezirkulationsanschluss könnte bevorzugt ein Rückschlagventil angeordnet sein. Dieses verhindert, dass Luft direkt von der ersten Fluidkammer in die zweite Fluidkammer strömt und dabei die Brennstoffzelleneinheit vollständig überbrückt. Der Betrieb der Brennstoffzelleneinheit wird dadurch bei beliebiger Rezirkulation sichergestellt werden.

Das Brennstoffzellensystem kann in einer vorteilhaften Ausführungsform ferner eine dritte Druckregeleinrichtung aufweisen, die dazu eingerichtet ist, in Abhängigkeit von einem Umgebungsdruck des Brennstoffzellensystems einen Fluidvolumenstrom von der zweiten Fluidkammer in die erste Fluidkammer zu beeinflussen. Es ist beispielsweise bevorzugt, mit abnehmendem Druck bzw. steigender Höhe einen stärkeren Rezirkulationsvolumenstrom einzustellen. Insbesondere kann die Druckregeleinrichtung eingerichtet sein, den Volumenstrom stufenlos einzustellen. Es sollte jedoch in jedem Falle verhindert werden, dass eine Rezirkulation von 100% erfolgt und das erste Druckregelventil vollständig schließt. In diesem Falle würde der Betrieb der Brennstoffzelleneinheit unterbrochen werden.

Das erfindungsgemäße Brennstoffzellensystem kann ferner ein Spülventil aufweisen, das mit einem Anodenauslass verbunden ist und dazu eingerichtet ist, selektiv die Anode zu spülen. Ein solches Spülventil ist auch als "purge valve" bekannt und kann an oder in der Anode angesammeltes Wasser bedarfsweise oder in regelmäßigen oder unregelmäßigen Abständen abgeben. Das Spülen sollte zum Spülen von möglichst weniger als 2% des Wasserstoffs führen. Ferner sollte verhindert werden, dass vor, während oder nach dem Spülen anodenseitige Druckspitzen entstehen, die oberhalb einer tolerierbaren Druckdifferenz zwischen Anode und Kathode liegen. Diese ist von der Bauart der mindestens einen Brennstoffzelle abhängig und könnte etwa bei 350-400 mbar liegen.

Das Brennstoffzellensystem kann ferner ein Brennstoffdruckregelventil aufweisen, das mit dem Anodeneinlass gekoppelt ist und dazu eingerichtet ist, einen Durchfluss von Brennstoff in den Anodeneinlass zu beeinflussen. Dadurch wird eine Art Vorregelung durchgeführt. Besonders bei der Verwendung von Brennstoffzellen, die reinen Wasserstoff verbrauchen, kann ein relativ hoher Druck an einer Einrichtung zum Abgeben von Wasserstoff vorliegen. Durch das Brennstoffdruckregelventil wird der Brennstoffdruck gedrosselt und liegt deutlich unter dem ursprünglichen Druck. An das zweite Druckregelventil, wenn es eingesetzt wird, können dann deutlich niedrigere Anforderungen gestellt werden. Bevorzugt ist das Brennstoffdruckregelventil ein fest eingestelltes oder fest einstellbares Druckregelventil.

In einer weiter vorteilhaften Ausführungsform sind die Einrichtung zum Bereitstellen druckbeaufschlagter Luft und die erste Druckregeleinrichtung dazu eingerichtet, einen für den Betrieb der Brennstoffzelleneinheit vorbestimmten Betriebsdifferenzdruck unabhängig von einem Umgebungsdruck des Brennstoffzellensystems einzustellen und aufrechtzuerhalten. Dadurch wird ein gewünschter Luftvolumenstrom sichergestellt.

Für die Druckregelventile kommen mehrere Wirkprinzipien in Betracht, die einem Fachmann geläufig sind. Insbesondere können sie als federbelastete Membranventile ausgeführt werden. Statt dieser könnten auch elektrisch angesteuerte Ventile eingesetzt werden, welche mit einer Steuereinheit gekoppelt sind. Die Steuereinheit kann ferner mit Sensoren gekoppelt sein, die relevante Drücke messen und die Steuereinheit zur direkten Ansteuerung der Ventile veranlasst.

Die Erfindung betrifft ferner ein Luftfahrzeug, aufweisend einen Rumpf und mindestens ein Brennstoffzellensystem mit den vorangehend genannten Merkmalen.

Das mindestens eine Brennstoffzellensystem kann in einem nicht druckbeaufschlagten Bereich des Luftfahrzeugrumps angeordnet sein. Durch den vorangehend geschilderten Aufbau kann die Brennstoffzelleneinheit von dem Umgebungsdruck des Luftfahrzeugs unabhängig betrieben werden. Eine Positionierung in einem nicht druckbeaufschlagten Bereich des Luftfahrzeugs ist daher ohne weiteres möglich.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1a zeigt eine schematische Darstellung des Brennstoffzellensystems.
Fig. 1b und 1c zeigen schematische Darstellungen der beiden Fluidkammern in einer Seitenansicht.
Fig. 2 zeigt ein Luftfahrzeug in Form eines Verkehrsflugzeugs mit einem darin installierten Brennstoffzellensystem.

### DETAILLIERTE DARSTELLUNG EXEMPLARISCHER AUSFÜHRUNGSFORMEN

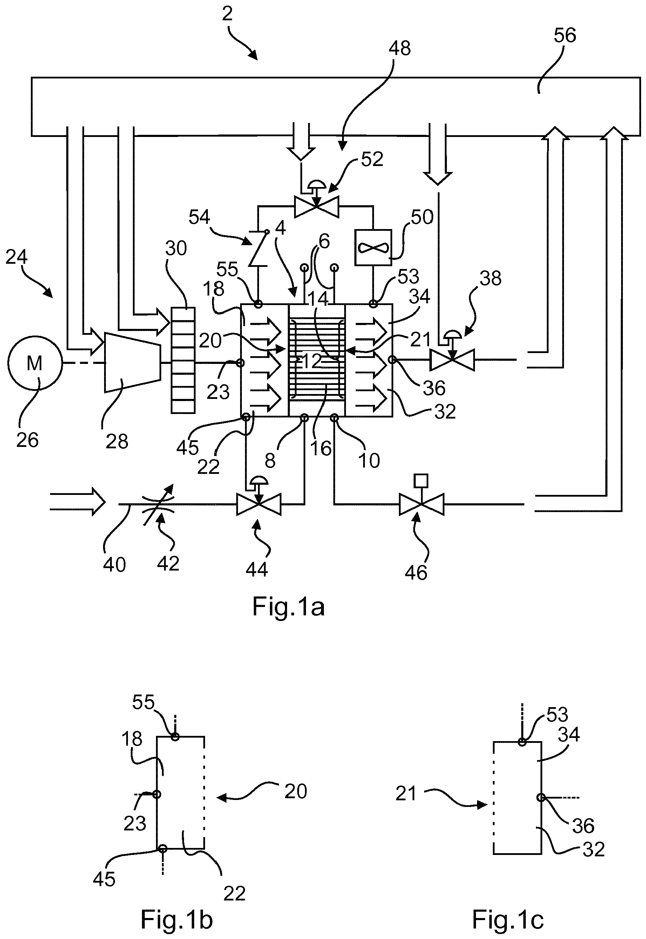

Fig. 1a zeigt eine schematische Darstellung eines Brennstoffzellensystems 2. Dieses weist eine Brennstoffzelleneinheit 4 auf, welche beispielhaft mehrere einzelne (nicht einzeln dargestellte) Brennstoffzellen besitzt, die zusammen eine kohärente Einheit beispielsweise in Form eines Brennstoffzellenstapels bilden. Zum Versorgen von Verbrauchern mit elektrischer Spannung ist die Brennstoffzelleneinheit 4 mit elektrischen Leitern 6 versehen, welche etwa mit einem Bordnetz eines Luftfahrzeugs verbunden werden können, wenn das Brennstoffzellensystem 2 in einem solchen installiert ist. Zum Versorgen der Brennstoffzelleneinheit 4 mit Brennstoff, beispielsweise Wasserstoff, ist ein Anodeneinlass 8 und ein Anodenauslass 10 vorgesehen.

Die Brennstoffzelleneinheit 4 weist zudem einen Einströmquerschnitt 12 und einen Ausströmquerschnitt 14 auf, die dazu dienen, Luft durch eine offene Kathode 16 der Brennstoffzelleneinheit 4 strömen zu lassen. Direkt an den Einströmquerschnitt 12 schließt sich eine erste Fluidkammer 18 an, welche eine erste Verbindungsöffnung 20 aufweist, die ausschließlich mit dem Einströmquerschnitt 12 verbunden ist. Ein erster Hohlraum 22 im Innern der ersten Fluidkammer 18 steht daher ausschließlich mit dem Einströmquerschnitt 12 in Fluidverbindung.

Weiter ist eine Einrichtung 24 zum Bereitstellen druckbeaufschlagter Luft vorgesehen. Diese ist mit einem Motor 26 und einem durch den Motor 26 antreibbaren Verdichter 28 ausgestattet und stellt druckbeaufschlagte Luft bereit. Diese kann durch die Kompression erwärmt sein und wird in diesem Ausführungsbeispiel durch einen optionalen Vorkühler 30 geleitet, der lediglich schematisch dargestellt ist. Es ist selbstverständlich, dass der Vorkühler 30 dazu eingerichtet ist, die komprimierte Luft zu kühlen und die Wärme der komprimierten Luft beispielsweise durch ein geeignetes Medium von dem Vorkühler 30 zu einer Wärmeabgabeeinrichtung (nicht gezeigt) zu transportieren.

Durch Einleiten der druckbeaufschlagten Luft über einen ersten Fluidanschluss 23 entsteht in dem ersten Hohlraum 22 ein Überdruck, durch den Luft über den Einströmquerschnitt 12 in die Kathode 16 hinein strömt. Da die Kathode 16 als offene Kathode ausgeführt ist, strömt die Luft durch diese hindurch und über den Ausströmquerschnitt 14 in eine zweite Fluidkammer 32, d. h. in einen dort vorhandenen zweiten Hohlraum 34. Die zweite Fluidkammer 32 weist eine zweite Verbindungsöffnung 21 auf, die ausschließlich mit dem Ausströmquerschnitt 14 in Verbindung steht. Über einen zweiten Fluidanschluss 36 wird die Luft nach außen abgegeben. Hierdurch wird die Kathode 16 durch die Luft mit Sauerstoff versorgt und ferner gekühlt.

Stromabwärts des zweiten Fluidanschlusses 36 ist eine erste Druckregeleinrichtung 38 angeordnet, welche beispielhaft in Abhängigkeit von einem Umgebungsdruck den Abfluss aus dem zweiten Hohlraum 34 beeinflusst. Dadurch wird der Druck sowohl in dem zweiten Hohlraum 34 als auch in dem ersten Hohlraum 22 beeinflusst. Durch gezielte Beeinflussung des Abflusses kann ein bestimmtes Druckniveau in dem zweiten Hohlraum 34 erreicht werden und durch die Fluidverbindung mit dem ersten Hohlraum 22 auch dort.

Zur Vorregelung eines Brennstoffdrucks ist eine Brennstoffleitung 40 mit einem Brennstoffdruckregelventil 42 ausgestattet, welches als ein einfaches Drosselventil ausgeführt sein könnte. Eine zweite Druckregeleinrichtung 44 ist hier exemplarisch stromabwärts des Brennstoffdruckregelventils 42 angeordnet und kann in Abhängigkeit von dem Druck in dem ersten Hohlraum 22 einen Druck des Brennstoffs stromabwärts der zweiten Druckregeleinrichtung 44 einstellen. Hierzu ist die zweite Druckregeleinrichtung über einen Druckanschluss 45 mit der ersten Fluidkammer 18 verbunden. Durch die Vorregelung des Brennstoffdrucks muss die zweite Druckregeleinrichtung 44 nur eine relativ geringe Reduktion des Brennstoffdrucks vornehmen. Weiter stromabwärts folgt der Anodeneinlass 8, in den der Brennstoff eingeleitet wird. Es ist bevorzugt, dass der Druck des Brennstoffs an dem Anodeneinlass 8 im Wesentlichen dem Druck in dem ersten Hohlraum 22 entspricht.

Um die Anode der Brennstoffzelleneinheit 4 zu spülen und dabei insbesondere von angesammeltem Wasser zu befreien, ist ein Spülventil 46 vorhanden. Die Betätigung kann selektiv, bedarfsweise oder automatisiert in bestimmten Zeitabständen erfolgen.

Unter anderem zur verbesserten Angleichung der Drücke in dem ersten Hohlraum 22 und dem zweiten Hohlraum 34 kann eine Bypassanordnung 48 verwendet werden. Diese weist beispielhaft ein Gebläse 50, eine dritte Druckregeleinrichtung 52 und ein Rückschlagventil 54 auf. Hierdurch kann dem zweiten Hohlraum 34 über einen zweiten Rezirkulationsanschluss 53, der gleichzeitig einer von mehreren zweiten Fluidanschlüssen sein kann, Luft entnommen werden. Diese kann durch das Gebläse 50 zu einem ersten Rezirkulationsanschluss 55 gefördert werden. Dieser kann einer von mehreren ersten Fluidanschlüssen sein. Folglich wird aktiv durch das Gebläse 50 Luft aus dem zweiten Hohlraum 34 entnommen und dem ersten Hohlraum 22 zugeführt. Durch das Rückschlagventil 54 wird erreicht, dass Luft nicht direkt aus der ersten Fluidkammer 18 in die zweite Fluidkammer 32 strömen kann. Das Gebläse 50 ist so auszulegen, dass die hierdurch erreichbare Druckdifferenz den Druckabfall zwischen der ersten Fluidkammer 18 und der zweite Fluidkammer 32 übersteigt.

Die dritte Druckregeleinrichtung 52 ist dazu eingerichtet, abhängig von einem Umgebungsdruck des Brennstoffzellensystems 2 einen Fluidvolumenstrom von der zweiten Fluidkammer 32 in die erste Fluidkammer 18 zu beeinflussen. Insbesondere öffnet die dritte Druckregeleinrichtung 52 bei niedriger werdendem Umgebungsdruck und schließt bei höher werdendem Umgebungsdruck.

Lediglich beispielhaft wird die Umgebung mit dem Umgebungsdruck und der in der Umgebung enthaltenen Luft als ein Block dargestellt, der das Bezugszeichen 56 aufweist. Luft aus der Umgebung 56 wird dem Verdichter 28, dem Vorkühler 30 und der ersten Druckregeleinrichtung 38 sowie in Form eines Drucks der dritten Druckregeleinrichtung 52 zugeführt.

Fig. 1b und 1c zeigen weiterhin schematisch die beiden Fluidkammern 18 und 32, bei denen jeweils die Verbindungsöffnung 20 bzw. 21 angedeutet ist. Diese ist an den Einströmquerschnitt 12 bzw. Ausströmquerschnitt 14 angepasst. Die beiden Fluidkammern 18 und 32 sind derart ausgebildet, dass sie an die Brennstoffzelleneinheit 4 bevorzugt bündig anbringbar sind. Dabei sollen die Verbindungsöffnungen 20 und 21 ausschließlich mit dem jeweiligen Querschnitt 12 bzw. 14 in Verbindung gebracht werden. Übergänge bzw. Trennstellen zwischen der Brennstoffzelleneinheit 4 und äußeren Begrenzungen der Fluidkammern 18 und 32 sind dabei abgedichtet.

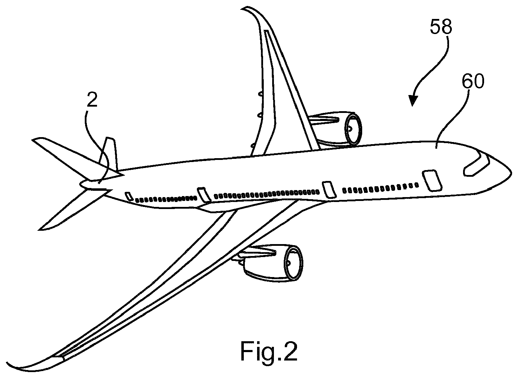

Fig. 2 zeigt ein Luftfahrzeug 58, das einen Rumpf 60 und ein darin installiertes Brennstoffzellensystem 2 aufweist. Das Brennstoffzellensystem 2 ist beispielhaft in einem hinteren Teil des Rumpfs 60 angeordnet und befindet sich bevorzugt in einem nicht druckbeaufschlagten Bereich.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Brennstoffzellensystem (2) für ein Luftfahrzeug, aufweisend:
- eine Brennstoffzelleneinheit (4) mit einem Anodeneinlass (8) und einer offenen Kathode (16), die einen Einströmquerschnitt (12) und einen Ausströmquerschnitt (14) aufweist,
- eine erste Fluidkammer (18) mit einem ersten Hohlraum (22), einer ersten Verbindungsöffnung (20) und mindestens einem ersten Fluidanschluss (23),
- eine zweite Fluidkammer (32) mit einem zweiten Hohlraum (34), einer zweiten Verbindungsöffnung (21) und mindestens einem zweiten Fluidanschluss (36),
- eine mit dem ersten Fluidanschluss (23) gekoppelte Einrichtung (24) zum Bereitstellen druckbeaufschlagter Luft,
- einen mit dem zweiten Fluidanschluss (36) gekoppelten Luftauslass, und
- eine erste Druckregeleinrichtung (38),
wobei die erste Verbindungsöffnung (20) mit dem Einströmquerschnitt (12) verbunden ist, so dass der Einströmquerschnitt (12) ausschließlich mit dem ersten Hohlraum (22) direkt in Verbindung steht,
wobei die zweite Verbindungsöffnung (21) mit dem Ausströmquerschnitt (14) verbunden ist, so dass der Ausströmquerschnitt (14) ausschließlich mit dem zweiten Hohlraum (34) in direkter Verbindung steht,
wobei die erste Druckregeleinrichtung (38) dazu ausgebildet ist, durch Beeinflussen des Abflusses von Luft aus der zweiten Fluidkammer (32) einen Überdruck in dem zweiten Hohlraum (34) zu regeln, so dass ein vorbestimmter, für den Betrieb der Brennstoffzelleneinheit (4) erforderlicher Luftfluss von der ersten Fluidkammer (18) durch die offene Kathode der Brennstoffzelleneinheit (4) zu der zweiten Fluidkammer (32) fließt.

2. Brennstoffzellensystem (2) nach Anspruch 1,
wobei die erste Druckregeleinrichtung (38) dazu eingerichtet ist, den Überdruck in dem zweiten Hohlraum (34) in Abhängigkeit von einem Umgebungsdruck des Brennstoffzellensystems (2) zu ändern.

3. Brennstoffzellensystem (2) nach Anspruch 1 oder 2,
ferner aufweisend eine zweite Druckregeleinrichtung (44),
wobei der Anodeneinlass (8) mit einer Einrichtung zum Bereitstellen von Wasserstoff gekoppelt ist,
wobei die zweite Druckregeleinrichtung (44) in Wirkverbindung mit dem Anodeneinlass (8) und der Einrichtung zum Bereitstellen von Wasserstoff steht, und
wobei die zweite Druckregeleinrichtung (44) dazu eingerichtet ist, einen Brennstoffdruck an dem Anodeneinlass (8) abhängig von einem Druck in der ersten Fluidkammer (18) zu beeinflussen.

4. Brennstoffzellensystem (2) nach einem der vorhergehenden Ansprüche,
wobei die Einrichtung (24) zum Bereitstellen druckbeaufschlagter Luft einen Verdichter (28) aufweist, der mit dem ersten Fluideinlass (23) gekoppelt ist.

5. Brennstoffzellensystem (2) nach einem der vorhergehenden Ansprüche,
wobei ein Vorkühler (30) zum Kühlen druckbeaufschlagter Luft zwischen der Einrichtung (24) zum Bereitstellen druckbeaufschlagter Luft und dem ersten Fluideinlass (23) angeordnet ist.

6. Brennstoffzellensystem (2) nach einem der vorhergehenden Ansprüche,
wobei die erste Fluidkammer (18) einen ersten Rezirkulationsanschluss (55) und die zweite Fluidkammer (32) einen zweiten Rezirkulationsanschluss (53) aufweist,
wobei der erste Rezirkulationsanschluss (55) und der zweite Rezirkulationsanschluss (53) über ein Gebläse (50) miteinander gekoppelt sind, das Luft aus der zweiten Fluidkammer (32) in die erste Fluidkammer (18) fördert.

7. Brennstoffzellensystem (2) nach Anspruch 6,
ferner aufweisend ein Rückschlagventil (54) zwischen dem Gebläse (50) und dem ersten Rezirkulationsanschluss (55).

8. Brennstoffzellensystem (2) nach Anspruch 6 oder 7,
ferner aufweisend eine dritte Druckregeleinrichtung (52), die dazu eingerichtet ist, in Abhängigkeit von einem Umgebungsdruck des Brennstoffzellensystems (4) einen Fluidvolumenstrom von der zweiten Fluidkammer (32) in die erste Fluidkammer (18) zu beeinflussen.

9. Brennstoffzellensystem (2) nach einem der vorhergehenden Ansprüche,
ferner aufweisend ein Spülventil (46), das mit einem Anodenauslass (10) verbunden ist und dazu eingerichtet ist, selektiv die Anode der Brennstoffzelleneinheit (4) zu spülen.

10. Brennstoffzellensystem (2) nach einem der vorhergehenden Ansprüche,
ferner aufweisend ein Brennstoffdruckregelventil (42), das mit dem Anodeneinlass (8) gekoppelt ist und dazu eingerichtet ist, einen Durchfluss von Brennstoff in den Anodeneinlass (8) zu beeinflussen.

11. Brennstoffzellensystem (2) nach einem der vorhergehenden Ansprüche,
wobei die Einrichtung (24) zum Bereitstellen druckbeaufschlagter Luft und die erste Druckregeleinrichtung (38) dazu eingerichtet sind, einen für den Betrieb der Brennstoffzelleneinheit (4) vorbestimmten Betriebsdifferenzdruck unabhängig von einem Umgebungsdruck des Brennstoffzellensystems (2) einzustellen und aufrechtzuerhalten.

12. Luftfahrzeug (58), aufweisend einen Luftfahrzeugrumpf (60) und mindestens ein Brennstoffzellensystem (2) nach einem der Ansprüche 1 bis 11.

13. Luftfahrzeug (58) nach Anspruch 12,
wobei das mindestens eine Brennstoffzellensystem (2) in einem nicht druckbeaufschlagten Bereich des Luftfahrzeugrumpfs (60) angeordnet ist.
